Europäisches Patentamt

European Patent Office

Office européen des brevets

(11) Numéro de publication: **0 393 763**
**A1**

## (12) DEMANDE DE BREVET EUROPEEN

(21) Numéro de dépôt: **90200901.8**

(22) Date de dépôt: **12.04.90**

(51) Int. Cl.5: **H04N 5/217, H04N 5/33**

(30) Priorité: **18.04.89 FR 8905123**

(43) Date de publication de la demande:
**24.10.90 Bulletin 90/43**

(84) Etats contractants désignés:
**DE FR GB**

(71) Demandeur: **TELECOMMUNICATIONS RADIOELECTRIQUES ET TELEPHONIQUES T.R.T.**
**88 rue Brillat Savarin**
**F-75640 Paris Cédex 13(FR)**

㊶ **FR**

Demandeur: **N.V. Philips'**

**Gloeilampenfabrieken**
**Groenewoudseweg 1**
**NL-5621 BA Eindhoven(NL)**

㊶ **DE GB**

(72) Inventeur: **Pieve, Patrick, Societé Civile S.P.I.D.**
**209 rue de l'Université**
**F-75007 Paris(FR)**

(74) Mandataire: **Chaffraix, Jean et al**
**Société Civile S.P.I.D. 156, Boulevard Haussmann**
**F-75008 Paris(FR)**

(54) Procédé de correction des dispersions des décalages présentés par les détecteurs photoélectriques et dispositif de correction utilisant un tel procédé.

(57) Ce procédé de correction des dispersions des décalages présentés par des détecteurs photoélectriques disposés de manière matricielle présentant de préférence un taux de recouvrement supérieur à 1 utilise le principe de continuité naturelle d'une scène analysée. Chaque écart de décalage entre deux colonnes (ou deux lignes) adjacentes est estimé par formation de l'histogramme (HFD) de la différence des niveaux de ces 2 colonnes (de ces 2 lignes), la valeur maximum de l'histogramme représentant l'écart de décalage le plus probable qui est alors mémorisé, pondéré puis soustrait (IPD) du niveau (IFD) issu des détecteurs correspondants autorisant ainsi la compensation automatique (CI) en temps réel des écarts de décalage

Application : détecteurs photoélectriques.

FIG.1

La présente invention a pour objet un procédé de correction des dispersions des décalages présentés par des détecteurs photoélectriques disposés selon des lignes et des colonnes pour la mesure ou la visualisation d'une scène ainsi que le dispositif de correction par lequel est mis en oeuvre ledit procédé.

De manière connue les éléments photoélectriques fabriqués actuellement ne sont pas susceptibles de délivrer, à éclairement identique, des signaux de sortie identiques. Les écarts de niveau ou décalages observés en sortie sont communément appelés "offsets". Ils sont sources d'erreurs pour les systèmes de mesure et sources de dégradations des images pour les systèmes de visualisation et pour cette raison doivent être impérativement corrigés.

Le procédé de correction le plus couramment utilisé à ce jour consiste à placer une référence lumineuse devant les détecteurs photoélectriques de manière à éclairer le plus uniformément possible lesdits détecteurs. Un tel procédé est connu et décrit dans la publication SPIE vol.865 Focal Plane Arrays Technology and Applications (1987), le titre de l'article étant : "Achievement of a bi-spectral IRCCD thermal imager". Cette référence lumineuse peut se présenter sous la forme d'un volet de masquage ou d'une source de longueur d'onde adaptée à celle du détecteur. La correction s'effectue selon deux phases. Dans une première phase dite phase de référence, la référence lumineuse est mise en place dans le champ de vision des détecteurs alors que le niveau provenant de chaque élément détecteur est gardé en mémoire. Dans une seconde phase la référence lumineuse est escamotée de manière à permettre l'analyse de la scène alors que du niveau issu de chaque élément détecteur est soustrait le niveau correspondant mémorisé lors de la phase de référence.

Un tel procédé de correction présente cependant divers inconvénients. En effet l'uniformité de la source de référence est difficile à obtenir, notamment pour les longueurs d'onde du spectre infrarouge, or la qualité de cette uniformité agit directement sur la précision de la correction. De plus les écarts d'offset ou décalages peuvent évoluer dans le temps car les divers éléments détecteurs diffèrent relativement à leur signal d'obscurité et de saturation à la pente de leurs caractéristiques et aux variations fonction du temps et de la température desdites caractéristiques. C'est pour cette raison que la phase de référence doit être renouvelée aussi souvent que nécessaire et ceci au détriment d'informations en provenance de la scène analysée car les deux phases décrites précédemment ne peuvent être effectuées simultanément. En outre les décalages peuvent également évoluer avec le niveau moyen du flux lumineux reçu par les éléments détecteurs. Dans ce cas ledit procédé ne permet pas de réaliser une correction et donc une compensation correcte dans toute la plage d'utilisation de l'ensemble de détection.

La présente invention propose un procédé de correction des dispersions des décalages qui ne présente pas les divers inconvénients du procédé connu.

Pour cela le procédé de correction du genre mentionné dans le préambule est remarquable en ce que chaque écart de décalage entre deux colonnes ou deux lignes adjacentes est estimé par formation de l'histogramme de la différence des niveaux de ces deux colonnes ou de ces deux lignes, niveaux délivrés par les détecteurs correspondants durant l'analyse de la scène, la valeur maximum de l'histogramme représentant alors l'écart de décalage le plus probable étant mémorisée puis soustraite, après traitement par ligne ou par colonne et filtrage, du niveau issu des détecteurs correspondants pour la compensation automatique en temps réel desdits écarts de décalage.

Ainsi l'idée de l'invention consiste à utiliser uniquement les niveaux de sortie délivrés par les détecteurs durant l'analyse de la scène, niveaux de sortie qui sont entachés chacun d'un niveau de décalage différent sur lequel se superpose le signal issu de la scène analysée par l'ensemble des détecteurs. L'idée de l'invention repose, en outre, sur le principe de continuité naturelle de toute scène analysée. En effet, les informations issues de la scène recueillies par deux éléments voisins (selon les colonnes ou selon les lignes), présentent une ressemblance d'autant plus grande que l'espace géométrique entre lesdits éléments est petit.

L'écart de décalage entre une colonne et la suivante (ou entre une ligne et la suivante) est estimé en formant l'histogramme de la différence des niveaux des deux colonnes (ou des deux lignes). Cet histogramme permet d'enregistrer pendant une durée $T$, à définir en fonction des contraintes d'utilisation, toutes les différences présentées par les deux colonnes (ou les deux lignes) consécutives. Ces différences proviennent essentiellement de l'écart de décalage qu'il est nécessaire de compenser, car l'écart engendré par la dissemblance des signaux issus des deux colonnes (ou des deux lignes) consécutives est faible en vertu du principe de continuité. L'écart de décalage le plus probable entre les deux colonnes (ou les deux lignes) est alors représenté par la valeur maximum de l'histogramme. En étendant de proche en proche cette opération à toutes les colonnes (ou à toutes les lignes, considérons par exemple ici $n$ colonnes), c'est-à-dire en formant les histogrammes des colonnes 1 et 2, 2 et 3, ..., $(n-1)$ et $n$, $(n-1)$ écarts de décalage sont obtenus, écarts qui, une fois mémorisés sont utilisés après traitement et filtrage pour la compensation jusqu'à l'enregistrement suivant.

Une telle opération est répétée indéfiniment de manière à réactualiser l'estimation des écarts, sans pour autant interrompre la prise d'informations en provenance de la scène analysée, car la compensation s'effectue en parallèle automatiquement et en temps réel.

Dans le but d'améliorer encore la précision et l'efficience du procédé selon l'invention, les détecteurs photoélectriques utilisés pour la correction des dispersions desquels est appliqué ledit procédé, sont remarquables en ce qu'ils présentent un taux de recouvrement supérieur ou égal à 1. En effet le résultat de l'estimation des écarts est plus précis lorsque les détecteurs photoélectriques présentent un taux de recouvrement supérieur à 1 dans la direction perpendiculaire à la direction d'analyse. Cette caractéristique d'utilisation des détecteurs sera explicitée ci-après à l'aide d'un dessin.

La description suivante en regard des dessins annexés, le tout donné à titre d'exemple non limitatif, fera bien comprendre comment l'invention peut être réalisée.

La figure 1 représente de manière très schématique le dispositif de correction utilisant le procédé conforme à l'invention.

La figure 2 donne des exemples (a, b, c) de répartition des différents éléments détecteurs photoélectriques.

La figure 3 présente un schéma synoptique du dispositif de correction selon l'invention.

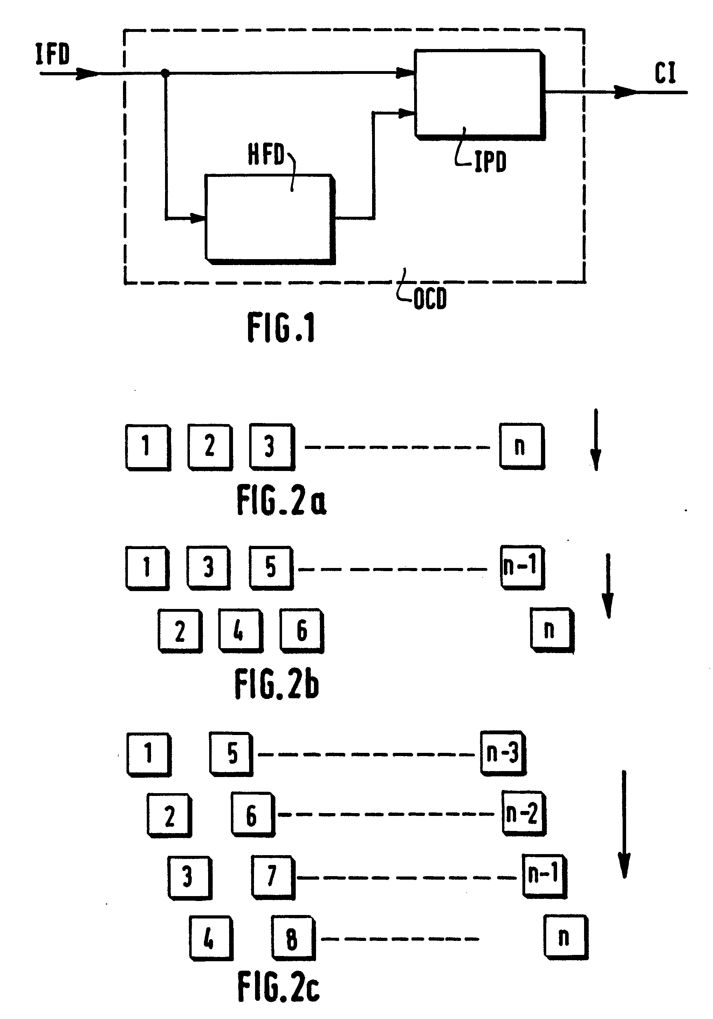

Sur la figure 1 est représenté très schématiquement, pour une meilleure appréhension, le dispositif de correction par lequel est mis en oeuvre le procédé selon l'invention. Ce dispositif de correction des dispersions de décalage OCD est constitué d'une part d'un dispositif formateur d'histogrammes HFD pour former l'histogramme de la différence des niveaux de deux lignes ou deux colonnes adjacentes et d'autre part d'un dispositif de traitement IPD des informations IFD issues des détecteurs photoélectriques pour traiter, filtrer et déterminer les niveaux à soustraire desdites informations pour, en coopération avec le dispositif formateur d'histogrammes, la compensation automatique en temps réel des écarts des décalages présentés par lesdits détecteurs et la restitution des informations corrigées CI.

Sur la figure 2 sont proposés, non limitativement, des exemples de répartition des différents éléments détecteurs photoélectriques.

Afin d'éviter des lourdeurs dans la description et relativement à l'exemple proposé, non limitatif, ladite description sera faite selon une analyse des colonnes et ceci ligne par ligne (cas d'une ligne de détecteurs horizontale et d'un balayage vertical).

Si, dans le cas inverse il était souhaité d'effectuer l'analyse selon les lignes, et ceci colonne par colonne (cas d'une colonne de détecteurs verticale et d'un balayage horizontal), il suffirait alors de remplacer trivialement dans la suite de l'exposé les mots colonne par ligne.

Ainsi dans l'exemple de la figure 2a, pris comme support explicatif, est présenté un ensemble détecteur composé d'une barrette linéaire de n éléments (n colonnes, 1 ligne, avec un taux de recouvrement inférieur à 1) qui analyse une scène à l'aide d'un balayage vertical selon le sens de la flèche (le balayage pourrait tout aussi bien être horizontal ou oblique) et qui fournit n signaux correspondant à n colonnes analysées. L'ensemble détecteur peut donc présenter n signaux de sortie entachés d'autant de niveaux de décalage différents sur lesquels se superposent les signaux issus de la scène analysée.

Selon le principe de continuité naturelle de toute scène analysée, les informations issues de la scène et recueillies par deux détecteurs photoélectriques voisins présentent une ressemblance d'autant plus grande que l'espace géométrique entre lesdits détecteurs est petit. Conformément à l'idée de l'invention l'écart de décalage est estimé entre une colonne et la suivante en formant l'histogramme de la différence des niveaux des deux colonnes qui permet ainsi d'enregistrer toutes les différences présentées par les deux colonnes consécutives.

Comme cela a été mentionné précédemment, ces différences proviennent essentiellement de l'écart de décalage qui doit être, selon l'invention, compensé, puisque l'écart engendré par la dissemblance des signaux issus des deux colonnes consécutives est faible conformément au principe de continuité.

La valeur maximum de l'histogramme représente alors l'écart de décalage le plus probable entre les deux colonnes. En formant les histogrammes des différences entre les colonnes 1 et 2, 2 et 3, ... et ceci jusqu'à (n-1) et n, (n-1) écarts de décalages sont obtenus pour l'ensemble détecteur, écarts qui sont mémorisés et utilisés, après traitement et filtrage, pour la compensation jusqu'à l'enregistrement suivant. Cette opération peut être répétée indéfiniment de manière à réactualiser l'estimation des écarts, mais ceci avantageusement sans interrompre la prise d'informations, la compensation s'effectuant en parallèle (voir figure 1).

Sur les figures 2b et 2c sont représentées deux configurations d'ensembles détecteurs qui, selon une caractéristique non limitative de l'invention, présentent un taux de recouvrement supérieur à 1 perpendiculaire à la direction de l'analyse. De telles configurations autorisent à une estimation des écarts de décalage encore plus précise.

La figure 2b donne l'exemple d'un ensemble détecteur comportant deux lignes et n colonnes, alors que la figure 2c offre un exemple dans lequel l'ensemble détecteur est composé de quatre lignes et n colonnes.

Dans ces configurations, deux éléments voisins, par exemple les éléments 2 et 3 ou 3 et 4, analysent deux colonnes de la scène qui comportent des parties communes. La ressemblance entre les signaux issus de deux éléments voisins est par conséquent encore plus grande que dans le cas d'un taux de recouvrement inférieur ou égal à 1 (cas de la figure 2a) et l'estimation de l'écart de décalage s'en trouve avantageusement affinée.

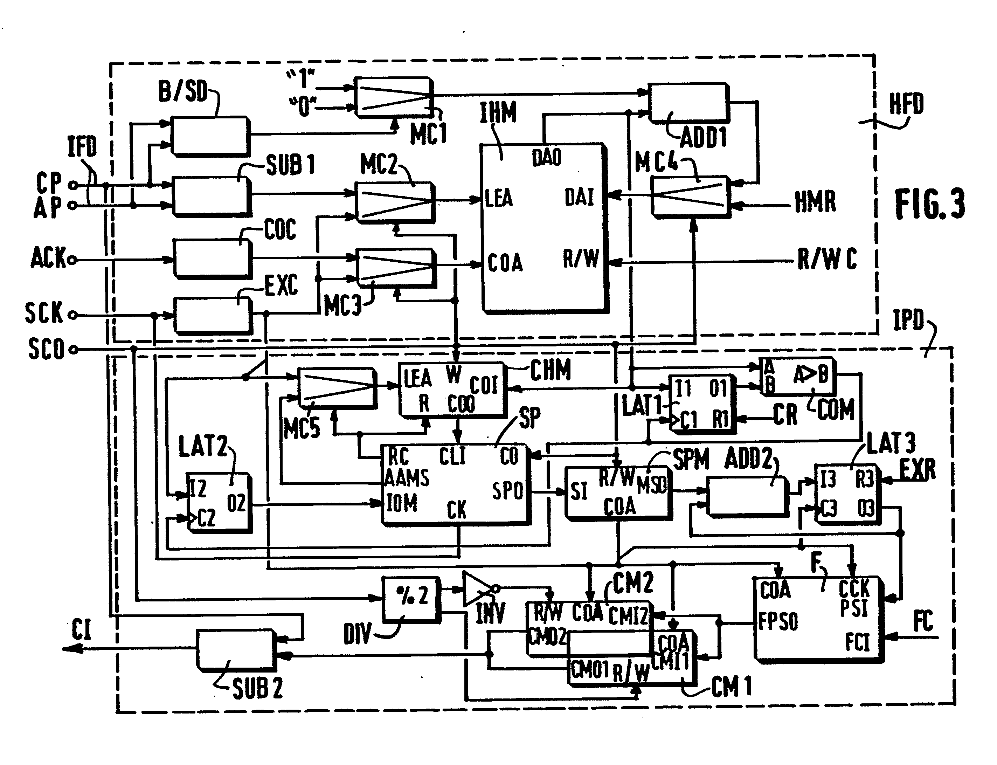

Sur la figure 3 est proposé un schéma synoptique du dispositif de correction conforme à l'invention permettant de préciser les différentes opérations réalisées par les différents circuits constituant le dispositif formateur d'histogrammes HFD et le dispositif de traitement IPD.

Selon une application préférée du dispositif de correction de l'invention le dispositif formateur d'histogrammes est principalement élaboré autour d'une mémoire de type RAM appelée mémoire histogramme image coopérant avec un circuit soustracteur, un circuit additionneur, un circuit de détection de saturation ou de blocage et des circuits de comptage, le circuit soustracteur effectuant la différence des niveaux de deux colonnes adjacentes, la mémoire RAM étant adressée par la valeur de la différence des niveaux à ranger dans l'histogramme, cette valeur étant incrémentée par l'intermédiaire du circuit additionneur chaque fois qu'une même adresse est rencontrée alors que le circuit de détection de saturation ou de blocage permet d'interdire l'incrémentation lorsque des niveaux saturants ou bloquants sont détectés, l'ensemble des opérations de lecture et d'écriture dans la mémoire se faisant au rythme des circuits de comptage.

Ainsi le dispositif formateur d'histogrammes HFD reçoit les informations IFD issues des détecteurs et en particulier le signal relatif au niveau du pixel (élément d'image) courant CP et le signal relatif au niveau du pixel adjacent AP. Lui sont appliqués en outre les signaux d'horloge d'analyse ACK à l'entrée d'un compteur colonne COC, d'horloge d'exploration SCK à l'entrée d'un compteur exploration EXC et de commande d'exploration SCO, signaux existant préalablement et indépendamment du dispositif de correction. Les signaux CP et AP sont appliqués chacun d'une part à une entrée d'un circuit soustracteur SUB1 qui forme la différence entre le niveau du pixel courant et le niveau du pixel adjacent et d'autre part à une entrée d'un circuit de détection de saturation et de blocage B/SD qui détecte les niveaux bloquants ou saturants. La sortie du circuit B/SD commande un circuit multiplexeur $MC_1$ pour incrémenter (1), dans le cas où aucun niveau bloquant ou saturant n'a été détecté, ou ne pas incrémenter (0) dans le cas contraire, une entrée d'un circuit additionneur $ADD_1$ reliée à la sortie du circuit $MC_1$, les niveaux bloquants ou saturants n'étant pas incrémentés pour éviter de biaiser le calcul. L'acquisition de l'histogramme des différences est réalisée dans la mémoire histogramme image IHM. Pour cela la sortie du circuit SUB1 est appliquée à une entrée d'un circuit multiplexeur $MC_2$ commandé par le signal de commande d'exploration SCO, la seconde entrée du circuit $MC_2$ recevant le signal de sortie du compteur d'exploration EXC et la sortie du circuit $MC_2$ étant reliée à l'entrée adresses de niveau LEA de la mémoire IHM. La sortie du compteur colonne COC est reliée à une entrée d'un circuit multiplexeur $MC_3$ dont la seconde entrée est reliée à la sortie du compteur d'exploration EXC et dont la sortie est connectée à l'entrée adresses colonnes COA de la mémoire IHM, le circuit $MC_3$ étant également commandé par le signal SCO. La sortie du circuit additionneur $ADD_1$ est appliquée à une entrée d'un circuit multiplexeur $MC_4$ dont la seconde entrée reçoit un signal de remise à zéro HMR de la mémoire histogramme image et dont la sortie est reliée à l'entrée de données DAI de la mémoire IHM, le circuit $MC_4$ étant lui aussi commandé par le signal SCO. La sortie de données DAO de la mémoire IHM est appliquée à la seconde entrée de circuit $ADD_1$. Enfin la lecture et l'écriture R/W de la mémoire IHM sont commandées par le signal de commande lecture/écriture R/WC.

De même selon une application préférée du dispositif de correction selon l'invention le dispositif de traitement des informations issues des détecteurs photoélectriques comprend principalement une mémoire histogramme colonne pour stocker chaque histogramme relatif à la colonne, un circuit d'extraction de l'adresse du maximum de l'histogramme colonne, un processeur de signal vers lequel est transféré ladite adresse et qui lit la mémoire histogramme colonne aux adresses situées autour de l'adresse du maximum pour le calcul de la moyenne relative auxdites adresses, une mémoire des écarts observés d'une colonne à l'autre pour stocker les résultats du calcul du processeur de signal, un circuit additionneur pour l'addition cumulative desdits écarts ainsi propagés, un circuit de filtrage pour la pondération des écarts calculés, un circuit de mémorisation des corrections des dispersions, un circuit soustracteur pour soustraire lesdites corrections aux informations issues des détecteurs et la restitution des informations corrigées.

La sortie des données DAO de la mémoire IHM est reliée à l'entrée COI de la mémoire histogramme colonne CHM dont la commande d'écriture W se voit appliquer le signal SCO. Le circuit d'extraction du maximum est avantageusement constitué d'un circuit comparateur COM et d'un circuit de verrouillage $LAT_1$. La sortie des données DAO est appliquée d'une part à l'entrée A du circuit COM et d'autre part à l'entrée $I_1$ du circuit $LAT_1$ dont la sortie $O_1$ est connectée à l'entrée B du circuit COM. La sortie du circuit COM est reliée d'une part à l'entrée d'horloge $C_1$ du circuit $LAT_1$ et d'autre part à l'entrée d'horloge $C_2$ d'un second circuit de verrouillage $LAT_2$ dont l'entrée $I_2$ est reliée à la sortie du circuit EXC et à une entrée d'un circuit multiplexeur $MC_5$. Le circuit $LAT_1$ est remis à zéro par application à son entrée de remise à zéro $R_1$ du signal CR de remise à zéro colonne. La sortie $O_2$ du circuit $LAT_2$ est connectée à l'entrée IOM (entrée du maximum) d'un processeur de signal SP. Le processeur SP commande la lecture R de la mémoire CHM ainsi que le circuit multiplexeur $MC_5$ au moyen du signal RC de même que la recherche des adresses situées autour du maximum par application du signal AAMS à la seconde entrée du circuit $MC_5$. La sortie du circuit $MC_5$ est reliée à l'entrée adresses de niveau LEA de la mémoire CHM dont la sortie COO est appliquée à l'entrée niveaux colonne CLI du processeur SP. Le processeur reçoit d'autre part le signal d'horloge d'exploration SCK à son entrée CK et le signal de commande d'exploration SCO à son entrée CO. Le processeur de signal SP est un processeur simple qui doit être capable d'effectuer des opérations de cumul, de multiplication, de division et de gestion de mémoire.

Ainsi lorsque le signal de commande SCO est actif, la mémoire histogramme IHM est relue à l'aide du compteur d'exploration EXC et ceci colonne à colonne, lors de cette relecture la mémoire IHM est remise à zéro de manière à pouvoir effectuer l'acquisition suivante. Chaque colonne relue est mémorisée dans la mémoire histogramme colonne CHM dont l'écriture est commandée par le signal SCO. Pendant la relecture de chaque colonne, l'adresse du maximum de l'histogramme colonne est extraite et communiquée au processeur SP. Pour cela le circuit COM compare son entrée A à son entrée B et ne prend en compte la valeur appliquée en A, que lorsque celle-ci est supérieure à la valeur B conservée dans le circuit de verrouillage $LAT_1$. A la fin de la relecture de chaque colonne, le processeur SP lit le contenu de la mémoire histogramme colonne CHM aux adresses situées autour de l'adresse du maximum (par exemple ±2 adresses autour du maximum, soit au total 5 adresses y compris celle du maximum). Le processeur SP effectue alors le calcul de la moyenne relative aux adresses du maximum et situées autour de l'adresse du maximum selon l'expression :

$$\Sigma^i\, a_i x_i\, /\, \Sigma^i\, x_i,$$

où les $a_i$ représentent les adresses situées autour du maximum et les $x_i$ les valeurs correspondant au nombre d'apparitions desdites adresses, de manière à atteindre la moyenne de cette portion d'histogramme avec une grande précision. Le résultat du calcul produit à la sortie écarts SPO du processeur SP est transféré à l'entrée SI de la mémoire des écarts SPM, écarts observés d'une colonne à l'autre, à l'adresse colonne en cours d'exploration, l'entrée d'adresses colonne COA étant connectée à la sortie du compteur d'exploration EXC et la lecture ou l'écriture R/W de la mémoire SPM étant commandée par le signal SCO. Le circuit d'extraction du maximum est remis à zéro par application du signal CR de remise à zéro colonne sur l'entrée $R_1$ du circuit $LAT_1$ et l'exploration de la colonne suivante peut alors débuter.

La sortie des écarts mémoires MSO de la mémoire des écarts SPM est reliée à une entrée d'un circuit additionneur $ADD_2$ dont la sortie est connectée à l'entrée $I_3$ d'un circuit de verrouillage $LAT_3$. La sortie $O_3$ du circuit $LAT_3$ est reliée à une seconde entrée du circuit additionneur $ADD_2$. L'entrée d'horloge $C_3$ du circuit $LAT_3$ reçoit le signal d'horloge colonne généré par le compteur exploration EXC. Enfin le circuit $LAT_3$ est remis à zéro par application à son entrée de remise à zéro $R_3$ du signal EXR de remise à zéro exploration.

Une fois les valeurs d'écarts, représentant les écarts d'une colonne à l'autre, stockées dans la mémoire SPM, une colonne de référence doit être choisie, par exemple la première colonne, pour pouvoir propager lesdits écarts $E_1$, $E_2$, ..., $E_n$ et obtenir une correction exacte. Pour obtenir une telle correction les écarts doivent être propagés de manière cumulative. Ainsi, en considérant la première colonne comme colonne de référence, cette première garde sa valeur $E_1$, à la seconde colonne doit être affectée alors la valeur $(E_1 + E_2)$ représentant les écarts propagés et ainsi de suite jusqu'à la $n^{ième}$ colonne. La propagation des écarts se fait par lecture de la mémoire des écarts SPM et l'addition cumulative des écarts de chaque colonne par l'intermédiaire des circuits $ADD_2$ et $LAT_3$.

La sortie du circuit $LAT_3$ est également connectée à l'entrée des écarts propagés PSI du circuit de filtrage F pour la pondération des écarts calculés et propagés. Le circuit de filtrage selon l'invention est avantageusement constitué d'un filtre de type récursif du premier ordre dont le signal de sortie $y(n)$ est lié au signal d'entrée $x(n)$ par la relation $y(n) = (1-b)[x(n) + b.y(n-1)]$ où le coefficient b est une constante définie par l'égalité $b = 1-2^k$, k étant un entier positif. La théorie relative à un tel type de filtre est proposée dans l'ouvrage : "Traitement numérique du signal" de M.BELLANGER, seconde édition, pages 188 à 193, édité dans la "Collection Technique et Scientifique des Télécommunications". Dans le cas présent le choix du coefficient k permet de fixer la valeur de la constante de temps du filtre passe-bas du premier ordre ainsi constitué.

Les coefficients du filtre FC sont appliqués à l'entrée FCI du circuit F. Le circuit F reçoit en outre, d'une part en son entrée d'horloge colonne CCK le signal d'horloge généré par le compteur exploration EXC et d'autre part en son entrée adresses colonne COA le signal d'adresses également généré par le compteur exploration EXC. Ainsi chaque résultat intermédiaire, correspondant à la correction que doit subir chaque colonne est introduit dans le circuit de filtrage F à l'adresse de la colonne en cours de manière à être filtré relativement au résultat trouvé pour cette même colonne lors de l'acquisition antérieure.

La sortie des écarts propagés filtrés FPSO du circuit F est reliée à un circuit de mémorisation des corrections des dispersions. Ce circuit de mémorisation est, conformément à l'invention, avantageusement constitué de deux mémoires de correction, $CM_1$ et $CM_1$, dans lequelles les informations de sortie du circuit de filtrage relatives aux écarts pondérés, donc propagés et filtrés, sont alternativement écrites et lues en fonction de la parité des acquisitions d'informations. Ainsi la sortie FPSO du circuit F est reliée d'une part à l'entrée $CMI_1$ de la mémoire $CM_2$ et d'autre part à l'entrée $CMI_2$ de la mémoire $CM_2$. Aux entrées colonne COA des mémoires $CM_1$ et $CM_2$ est appliqué le signal d'adresses généré par le compteur exploration EXC. En outre, le signal de commande d'exploration SCO est transmis à l'entrée d'un circuit diviseur par 2 DIV dont une première sortie commande la lecture et l'écriture R/W de la première mémoire $CM_1$ et dont la seconde sortie inversée au moyen d'un circuit inverseur INV commande la lecture et l'écriture R/W de la seconde mémoire $CM_2$. De cette manière les mémoires de correction $CM_1$ et $CM_2$ sont relues à la vitesse pixel et alternativement afin de permettre la lecture de l'une pendant que dans l'autre est écrite la correction suivante. Les sorties $CMO_1$ et $CMO_2$ respectivement des mémoires $CM_1$ et $CM_2$ sont reliées à une entrée d'un circuit soustracteur $SUB_2$ permettant de soustraire les corrections, mémorisées dans les mémoires $CM_1$ et $CM_2$ aux informations issues des détecteurs et autoriser ainsi la restitution des informations corrigées. La seconde entrée de circuit $SUB_2$ reçoit donc le signal CP relatif au niveau du pixel courant, la sortie du circuit $SUB_2$ restituant alors les informations corrigées CI.

Le tableau suivant permettra de résumer les différentes opérations (suivant les phases d'acquisitions et d'explorations) effectuées selon le procédé et par le dispositif conformes à l'invention.

| ACQUISITION | EXPLORATION | ACQUISITION | EXPLORATION | ACQUISITION | EXPLORATION |
|---|---|---|---|---|---|
| Acquisition I | .Remise à zéro mémoire IHM<br><br>.Calcul écarts, mise en mémoire SPM | Acquisition II | . Remise à zéro mémoire IHM<br><br>. Calcul écarts, mise en mémoire SPM | Acquisition III | . Remise à zéro mémoire IHM<br><br>. Calcul écarts, mise en mémoire SPM |

.Propagation et filtrage écarts

.Propagation et filtrage écarts

.Ecriture écarts pondérés et mise en mémoire $CM_1$.

.Ecriture écarts pondérés et mise en mémoire $CM_2$

.Lecture écarts dans mémoire CM1 et correction.

Le dispositif de correction auquel est appliqué le procédé selon l'invention présente un avantage supplémentaire. En effet, l'ensemble de détecteurs photoélectriques peut comporter des éléments défectueux qui délivrent alors des signaux électriques non représentatifs du flux optique reçu. Dans ce cas il est nécessaire d'inhiber les signaux issus des colonnes comportant ces éléments de manière à éviter un biais dans le calcul et pour cela il suffit d'effectuer le calcul à l'aide de la colonne valide précédant immédiatement cette colonne défectueuse. Ainsi à la sortie du dispositif de correction les informations de la colonne défectueuse sont remplacées par les informations de la colonne précédente par duplication.

En outre, pour diminuer le temps de traitement compte tenu de la rapidité des circuits numériques actuellement disponibles il suffit de mener en parallèle les calculs de correction. Ainsi, par exemple en doublant un certain nombre de circuits la vitesse de traitement peut être augmentée d'un facteur 2.

En conclusion, le procédé selon l'invention offre une solution simple et efficace qui ne nécessite pas la mise en place de source de référence. Il autorise à une réactualisation en temps réel de l'estimation des écarts des décalages. Cette réactualisation permet de prendre en compte les évolutions de ces écarts avec le niveau moyen du flux lumineux reçu par les éléments détecteurs, de même que les évolutions de ces écarts dans le temps sans interrompre le flux d'informations utiles, l'estimation s'effectuant de manière parallèle.

## Revendications

1. Procédé de correction des dispersions des décalages présentés par des détecteurs photoélectriques disposés selon des lignes et des colonnes pour la mesure ou la visualisation d'images d'une scène, caractérisé en ce que chaque écart de décalage entre deux colonnes ou deux lignes adjacentes est estimé par formation de l'histogramme de la différence des niveaux de ces deux colonnes ou de ces deux lignes, niveaux délivrés par les détecteurs correspondants durant l'analyse de la scène, la valeur maximum de l'histogramme représentant alors l'écart de décalage le plus probable étant mémorisée puis soustraite, après traitement par ligne ou par colonne et filtrage, du niveau issu des détecteurs correspondants pour la compensation automatique en temps réel desdits écarts de décalage.

2. Utilisation de détecteurs photoélectriques pour la correction des dispersions desquels est appliqué le procédé conforme à la revendication 1, caractérisée en ce que lesdits détecteurs présentent un taux de recouvrement supérieur ou égal à 1.

3. Dispositif de correction des dispersions des décalages par lequel est mis en oeuvre le procédé conforme à la revendication 1, caractérisé en ce qu'il est constitué d'une part d'un dispositif formateur d'histogrammes pour former l'histogramme de la différence des niveaux de deux lignes ou deux colonnes adjacentes et d'autre part d'un dispositif de traitement des informations issues des détecteurs photoélectriques pour traiter, filtrer et déterminer les niveaux à soustraire desdites informations pour, en coopération avec le dispositif formateur d'histogrammes, la compensation automatique en temps réel des écarts des décalages présentés par lesdits détecteurs et la restitution des informations corrigées.

4. Dispositif de correction des dispersions des décalages selon la revendication 3, caractérisé en ce que le dispositif formateur d'histogrammes est principalement élaboré autour d'une mémoire de type RAM appelée mémoire histogramme image coopérant avec un circuit soustracteur, un circuit additionneur, un circuit de détection de saturation ou de blocage et des circuits de comptage, le circuit soustracteur effectuant la différence des niveaux de deux colonnes ou de deux lignes adjacentes, la mémoire RAM étant adressée par la valeur de la différence des niveaux à ranger dans l'histogramme, cette valeur étant incrémentée par l'intermédiaire du circuit additionneur chaque fois qu'une même adresse est rencontrée alors que le circuit de détection de saturation ou de blocage permet d'interdire l'incrémentation lorsque des niveaux saturants ou bloquants sont détectés, l'ensemble des opérations de lecture ou d'écriture dans la mémoire se faisant au rythme des circuits de comptage.

5. Dispositif de correction des dispersions des décalages selon l'une des revendications 3 ou 4, caractérisé en ce que le dispositif de traitement des informations issues des détecteurs photoélectriques comprend principalement une mémoire histogramme ligne ou histogramme colonne pour stocker chaque histogramme relatif à la ligne ou à la colonne, un circuit d'extraction de l'adresse du maximum de l'histogramme ligne ou de l'histogramme colonne, un processeur de signal vers lequel est transférée ladite adresse et qui lit la mémoire histogramme ligne ou histogramme colonne aux adresses situées autour de l'adresse du maximum pour le calcul de la moyenne relative auxdites adresses, une mémoire des écarts observés d'une colonne à l'autre ou d'une ligne à l'autre pour stocker les résultats du calcul du processeur de signal, un circuit additionneur pour l'addition cumulative desdits écarts ainsi propagés, un circuit de filtrage pour la pondération des écarts calculés, un circuit de mémorisation des corrections des dispersions, un circuit soustracteur pour soustraire lesdites corrections aux informations issues des détecteurs et la restitution des informations corrigées.

6. Dispositif de correction des dispersions des décalages selon l'une des revendications 3 à 5, caractérisé en ce que le circuit d'extraction du maximum est constitué d'un circuit comparateur et d'un circuit de verrouillage, chacun recevant les informations de sortie de la mémoire histogramme image alors que le circuit comparateur ne bascule que lorsque la valeur reçue est supérieure à la valeur conservée dans le circuit de verrouillage.

7. Dispositif de correction des dispersions des décalages selon l'une des revendications 3 à 6, caractérisé en ce que le processeur de signal effectue le calcul de la moyenne relative aux adresses du maximum et situées autour de l'adresse du maximum selon l'expression $\Sigma^i a_i x_i / \Sigma^i x_i$

dans laquelle les $a_i$ représentent les adresses situées autour du maximum et les $x_i$ les valeurs correspondant au nombre d'apparitions desdites adresses.

8. Dispositif de correction des dispersions des décalages selon l'une des revendications 3 à 7, caractérisé en ce que le circuit de filtrage pour la pondération des écarts calculés et propagés est un filtre de type récursif du premier ordre dont le signal de sortie $y(n)$ est lié au signal d'entrée $x(n)$ par la relation $y(n) = (1-b)[x(n) + b.y(n-1)]$ où le coefficient $b$ est une constante définie par l'égalité $b = 1-2^{-k}$, $k$ étant un entier positif.

9. Dispositif de correction des dispersions des décalages selon l'une des revendications 3 à 8, caractérisé en ce que le circuit de mémorisation des corrections des dispersions est constitué de deux mémoires de correction dans lesquelles les informations de sortie du circuit de filtrage relatives aux écarts pondérés sont alternativement écrites et lues en fonction de la parité des acquisitions d'informations.

FIG.1

FIG.2a

FIG.2b

FIG.2c

FIG.3

EP 0 393 763 A1

2-Ⅱ-PHF 89-534

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 713 694  (ZWIRN)(15-12-1987) * Colonne 2, lignes 33-53; colonne 3, ligne 62 - colonne 4, ligne 30; colonne 5, ligne 53 - colonne 6, ligne 34; colonne 11, lignes 10-25; figure 1 * --- | 1,3-5 | H 04 N   5/217 H 04 N   5/33 |
| X | US-A-4 214 271  (JONES et al.)(22-07-1980) * Colonne 3, ligne 18 - colonne 4, ligne 27 * --- | 1,3-5 | |
| A | GB-A-2 191 059  (T.R.T.)(02-12-1987) * Page 2, lignes 72-80; figure 8 * --- | 2 | |
| A | WO-A-8 701 893  (HUGHES AIRCRAFT CO.)(26-03-1987) * Page 13, ligne 9 - page 14, ligne 28 * ------ | 1,3-5 | |

**DOMAINES TECHNIQUES RECHERCHES (Int. Cl.5)**

H 04 N

Le présent rapport a été établi pour toutes les revendications

| Lieu de la recherche | Date d'achèvement de la recherche | Examinateur |
|---|---|---|
| LA HAYE | 26-07-1990 | BEQUET T.P. |